Europäisches Patentamt

European Patent Office

Office européen des brevets

(11) Publication number: **0 314 494**
**A2**

(12) **EUROPEAN PATENT APPLICATION**

(21) Application number: **88310151.1**

(22) Date of filing: **28.10.88**

(51) Int. Cl.⁴: **H 04 N 3/15**

(30) Priority: **30.10.87 JP 275526/87**
**30.10.87 JP 275529/87**
**29.06.88 JP 163541/88**

(43) Date of publication of application:
**03.05.89 Bulletin 89/18**

(84) Designated Contracting States: **DE FR GB**

(71) Applicant: **SEIKO EPSON CORPORATION**
**4-1, Nishishinjuku 2-chome**
**Shinjuku-ku Tokyo-to (JP)**

(72) Inventor: **Takeshita, Tetsuyoshi**
**c/o SEIKO EPSON CORPORATION 3-5 Owa 3-chome**
**Suwa-shi Nagano-ken (JP)**

**Machida, Yoshihiko**
**c/o SEIKO EPSON CORPORATION 3-5 Owa 3-chome**
**Suwa-shi Nagano-ken (JP)**

**Hasegawa, Kazumasa**
**c/o SEIKO EPSON CORPORATION 3-5 Owa 3-chome**
**Suwa-shi Nagano-ken (JP)**

(74) Representative: **Caro, William Egerton et al**
**J. MILLER & CO. Lincoln House 296-302 High Holborn**
**London WC1V 7JH (GB)**

(54) **Solid state image sensor.**

㊄ A solid state image sensor has at least one sensor chip (302,303). The chip comprises a plurality of photo-sensitive elements (D1 - D1734; 403,408; 502,507; 607-2, 609, 610; 014-1016) disposed in a line, and a scanning circuit (103-125; 1001) for selecting the photo-sensitive elements successively for generating a sensor output. The chip also comprises input lines (313) for supplying signals to the scanning circuit and output lines (312) for carrying signals from the photo-sensitive elements and respective ones of these lines cross over each other so as to minimise variations in the noise levels between the output lines. The scanning circuit includes a signal transmitting circuit (116-125, EP) for supplying an end pulse to indicate completion of a scanning operation and is arranged to generate this pulse during a period when the last photo-sensitive element in the line is selected. Shielding means (406, 411; 505, 508) are also provided at the ends of the line of photo-sensitive elements for shielding connection lines (405, 410; 504) between the scanning circuit and these elements against electro-static fields.

FIG 4

## Description

## SOLID STATE IMAGE SENSOR

The present invention relates to a solid state image sensor and, in particular, to the structure of a chip for a solid state image sensor, in which a plurality of such chips may be aligned in a line.

Solid state image sensors having a plurality of photo-sensitive elements and a scanning circuit are known and several examples of conventional solid state image sensors are discussed below.

Japanese Laid Open Patent Application No. 59-229968 discloses a first sensor, in which photo-sensitive elements and a plurality of IC chips providing a scanning circuit are formed separately. The scanning circuit chips are mounted on a substrate and the integrated circuits of the scanning circuit are connected to the photo-sensitive elements by a number of bonding wires which is substantially the same as that of the photo-sensitive elements. The problem with this is that the mounting of the scanning circuit chips on the substrate and the connecting of the photo-sensitive elements takes a long time and the cost is high. The larger the area to be read, or the higher the reading density, the higher the cost. Additionally, the distance between the photo-sensitive elements and the scanning circuit is inevitably long, which lowers the S/N ratio.

In a second sensor, disclosed in Japanese Laid Open Patent Application No. 59-86363, many CCD chips, composed of poly-crystalline silcon, are aligned vertically. Complicated signal processing including signal delay is performed in an additional circuit within each chip in order to operate the device serially as if the CCD chips were aligned in a line. Further, the photo-sensitive elements are arrayed in more than two lines spaced apart from each other in the horizontal direction, so that the optical reading element is very limited. Also, the start and stop of reading is not easy to do, thereby limiting the facsimile process. Consequently, this arrangement is both costly and difficult to use.

A third sensor, disclosed in Japanese Laid Open Patent Application No. 61-126861, comprises a plurality of IC chips aligned in a line. A line of photo-sensitive elements is incorporated within the chips, but in order to make the alignment pitch of the elements uniform, the shape and structure of the photo-sensitive elements near the joins between the chips are significantly different from those of the remaining photosensitive elements. As a result, neither the scanning circuit nor the photo-sensitive elements are symmetrical, causing further lack of symmetry elsewhere and thereby generating noise in use. Thus, this arrangement succeeds only in removing the difficulty in the mounting of the various components.

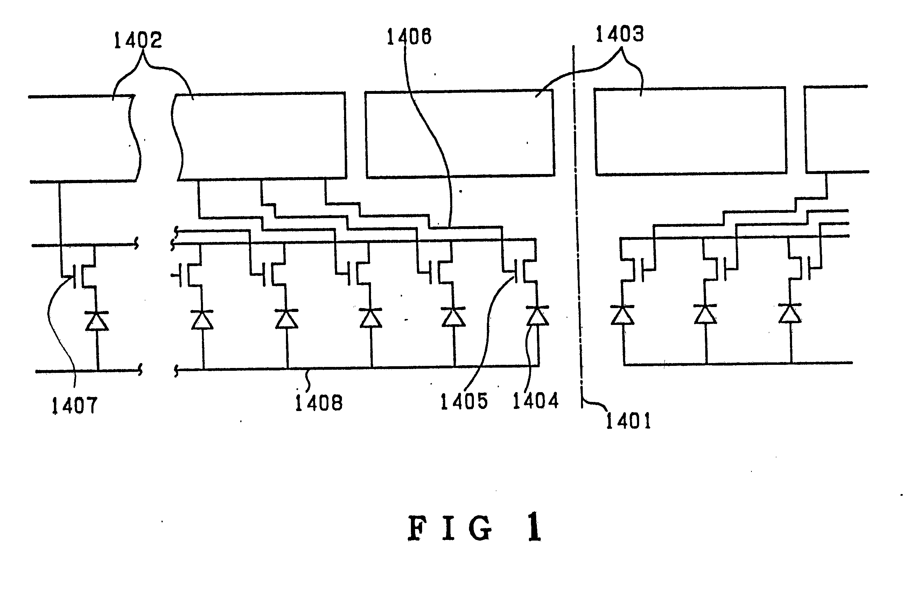

Based on the example immediately above, the possibility of constructing the photo-sensitive elements and the scanning circuit on the same substrate by using non-mono-crystalline silicon (amorphous, micro-crystalline poly-crystalline silicon, etc) has been considered. The substrate apart from the silicon wafer may be used for the photo-sensitive elements, the choice of area of the substrate being wide since the light incident on the photo-sensitive elements may pass through the substrate if this is transparent. However, more than one chip may need to be connected together to achieve the required performance. Figure 1 shows an example of the circuitry of such a sensor. As shown, each chip comprises a plurality of photo-sensitive elements 1404, a plurality of analog switches 1405 for selecting the respective elements 1404, and a scanning circuit 1402. The line 1401 designates a join between two chips, and a circuit 1403 is provided at the end of each chip adjacent the join 1401 in order to process signals for successive scanning of the photo-sensitive elements on different chips when a plurality of sensor chips are used in alignment. This results in a displacement of the scanning circuit 1402 and some of the photo-sensitive elements 1404, as shown by the lines 1406 connecting the analog switches 1405 to the circuit 1402.

Such a sensor has an improved performance, but there are some problems generated by the structure in realising low noise and high speed performance owing to the non-mono-crystalline silicon.

Referring to Figure 1, in the region where the circuit pattern changes towards the end of a chip, in particular in the vicinity of analog switch 1407 and the line connecting the analog switch to the scanning circuit 1402, the occurrence of noise becomes more marked. Beyond this line for controlling the analog switch 1407 and approaching the join, the symmetry of the arrangement of the connecting lines for the analog switches decreases. Therefore, the fixed pattern noise increases compared with the other portion of the sensor chip, thereby reducing the S/N ratio of the solid state image sensor.

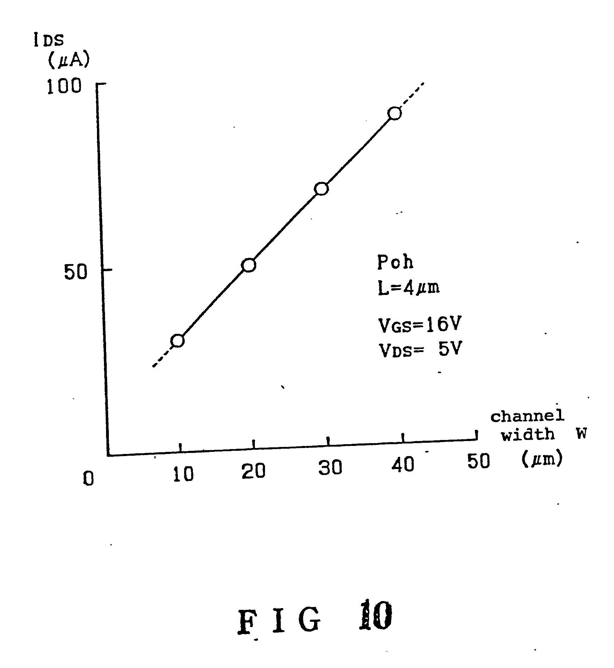

Figure 10 is a graph showing the dependency of channel width (hereinafter referred to as "W") on drain current (hereinafter referred to as "IDS" for a non-mono-crystalline silicon thin film transistor. Figure 10 represents an example wherein the channel length of a P-channel transistor is $L = 4$ microns, the voltage between gate and source $VGS = 16V$, and the voltage between drain and source $VDS = 5V$. In order to make the reading out speed fast, IDS of each transistor providing one of the analog switches 1405 must be large. However, in view of designing the chip, the process of making W large is taken. But if the value of W becomes large, the off current of the transistor also increases, thereby increasing the noise component of the reading out signal which is induced from the off current. Therefore, the solid state image sensor, when designed for performing high speed reading out, has a low S/N ratio.

Further, in order to make the optical reading area large, a video signal line 1408 between the photo-sensitive elements 1404 must be made to be long, thereby increasing the noise.

In addition, realisation of a solid state image sensor having a high resolution will introduce a deterioration in capacitance in the region of the photo-sensitive elements of the sensor in proportion with the area where the light is received by the photo-sensitive elements of the non-mono-crystalline silicon. In particular, when such a sensor is driven in the accumulation mode, the saturation electric charge and dynamic range deteriorate. Furthermore, an external circuit is needed having a large amplification factor for amplifying the small electric signals and for removing the large noise, and this is expensive.

The present invention seeks to solve the above problems and to provide a sensor chip which is adapted to be connected to other such chips in a line and which has a property of low noise in the region of the join. The invention thus aims to provide a solid state image sensor having a large area, which has the same level of optical and electrical symmetry as the one chip of the sensor, and in which high speed, low noise, high accuracy and high reliability performance may be achieved at low cost.

According to a first aspect of the invention, there is provided a solid state image sensor having at least one sensor chip comprising a plurality of photo-sensitive elements arranged in a line between a first and a second end of the chip, a scanning circuit for selecting the photo-sensitive elements respectively for generating a sensor output, and lines connecting the photo-sensitive elements to the scanning circuit characterised in that means are provided at the ends of the chip adjacent to the connecting lines for reducing noise in the region of the join when the chip is connected to a further such chip.

A second aspect of the invention features a solid state image sensor characterised in that a plurality of the sensor chips are provided and are connected together in series, and in that the scanning circuit of each succeeding chip is arranged to be responsive to the scanning signal pulse supplied by the signal transmitting circuit of the preceding chip for commencing a scanning operation.

A third aspect of the invention features a solid state image sensor having at least one sensor chip which comprises a plurality of photo-sensitive elements, a plurality of selection switches operable to select the photo-sensitive elements respectively for generating a sensor output, and a scanning circuit for operating the selection switches, characterised in that each selection switch comprises a pair of transistors arranged in parallel.

A fourth aspect of the invention features a solid state image sensor having at least one sensor chip, which comprises a plurality of photo-sensitive elements and a scanning circuit for selecting the photo-sensitive elements respectively for generating a sensor output, characterised in that a capacitor is provided in parallel with each of the photo-sensitive elements and is formed from the same material as other components of the sensor.

The invention is described further, by way of example, with reference to the accompanying drawings, in which:-

Figure 1 is a diagram of circuitry of a previously considered solid state image sensor;

Figures 2 (a), (b) and (c) are diagrams showing the basic circuitry within the or each chip of a solid state image sensor according to the present invention;

Figures 3 (a), (b) and (c) are charts showing the timing of signals generated in the embodiment shown in Figure 2;

Figure 4 shows the structure of a pair of the chips mounted on a substrate;

Figure 5 is a view showing an arrangement of photo-sensitive elements, transistors and connection lines to the transistors from the embodiment of Figure 2;

Figure 6 is a view of a modification of the arrangement shown in Figure 5;

Figure 7 is a sectional view through the chip of Figure 2 and showing a respective photo-sensitive element, a switch for selecting the element and a capacitor;

Figures 8, 9 (a) and (b) show modifications of the capacitor of Figure 7;

Figure 10 is a graph showing the dependency of channel width on drain current for a thin film transistor used in the present invention;

Figure 11 is a diagram showing one example of the switches for selecting the photo-sensitive elements;

Figure 12 is a plan view of two of the switches;

Figure 13 is a sectional view through part of Figure 12; and

Figure 14 is a view of a modification of the switches of Figure 12.

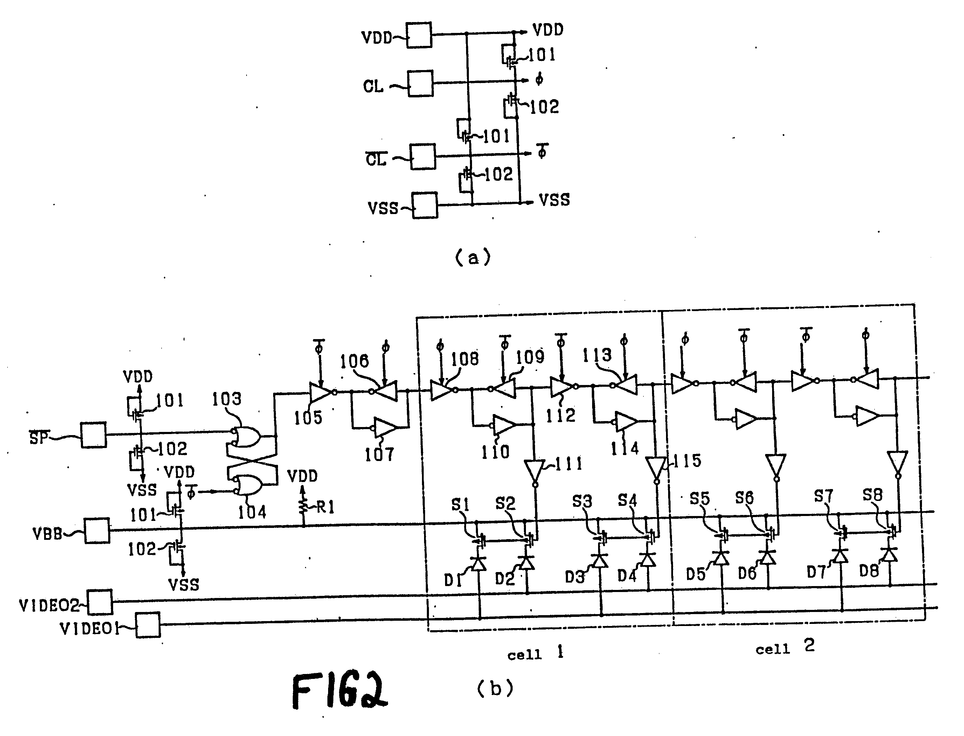

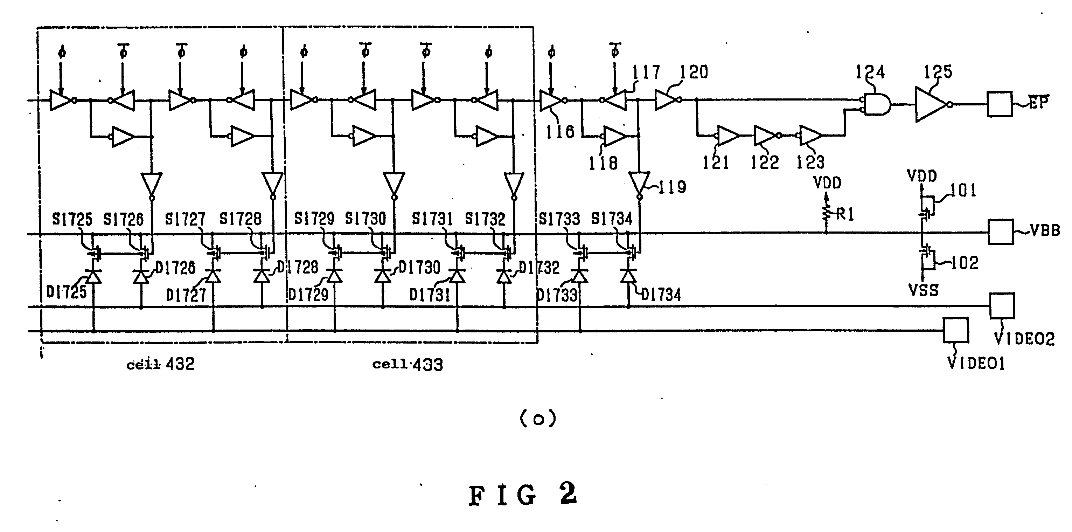

Figure 2 shows the circuit within a chip of a solid state image sensor embodying the invention. Figures 2 (a) and (b) show the initial part of the chip circuit and Figure 2 (c) shows the final part of the chip circuit.

Voltage inputs $V_{DD}$, $V_{SS}$ for transmitting voltage signals from a power source, and clock inputs CL, $\overline{CL}$ for transmitting clock signals, $\emptyset$ and $\overline{\emptyset}$ are shown in Figures 2 (a), (b) and (c) and are connected to each other as illustrated. A protection circuit, comprising transistors 101 and 102, provides a by-pass in the event that an over voltage is applied to the inputs.

The sensor chip further comprises a scanning circuit, a plurality of selection switches, a plurality of photo-sensitive elements, input terminals $\overline{SP}$ for supplying a start pulse, and $V_{BB}$ for providing a sensor bias, and output terminals VIDEO 1 and VIDEO 2, and $\overline{EP}$ for an end pulse.

The scanning circuit comprises a start pulse processing circuit, circuitry within a shift register which incorporates also the selection switches and the photo-sensitive elements, and an end pulse processing circuit.

The start pulse processing circuit comprises a pair of NAND gates 103 and 104 forming a flip-flop, clocked gates 105 and 106, and an inverter 107.

In the shift register, the basic cell comprises clocked gates 108, 109,112 and 113, and inverters 110, 111, 114 and 115, these being part of the scanning circuit. The cell also contains two pairs of the selection switches, indicated by the letter S and two pairs of the photo-sensitive elements indicated by the letter D. The shift register contains 433 cells in this embodiment. The switches comprise transistors and are numbered from S1 to S1734, and the photo-sensitive elements comprise photo-diodes and are numbered from D1 to D1734.

The end pulse processing circuit is shown in Figure 2 (c) and comprises clocked gates 116 and 117, inverters 118 to 123 and 125, and a NOR gate 124. The end pulse processing circuit provides a narrow end pulse, which is generated by the NOR gate 124 and the inverter 125 in response to a first pulse from the inverter 120 synchronous with a final photo-sensitive element selection pulse, and a second pulse, delayed by the inverters 121, 122 and 123. Other delay circuits can be used in place of the inverters 121, 122 and 123.

The narrow end pulse generated in the end pulse processing circuit of a first chip is applied to the start pulse processing circuit of a second chip, when two chips are connected together.

In operation, the start pulse for the or each chip is transformed by the NAND gates 103 and 104 into a photo-sensitive element selection pulse acceptable by the shift register. When the start pulse is applied to the start pulse input terminal $\overline{SP}$, the output of the NAND gate 103 is reversed and sets the shift register, then the output of the NAND gate 104 is reversed by the clock signal $\overline{\emptyset}$ at the same time that the shift register accepts data. This also reverses the NAND gate 103, and one data reading cycle is completed.

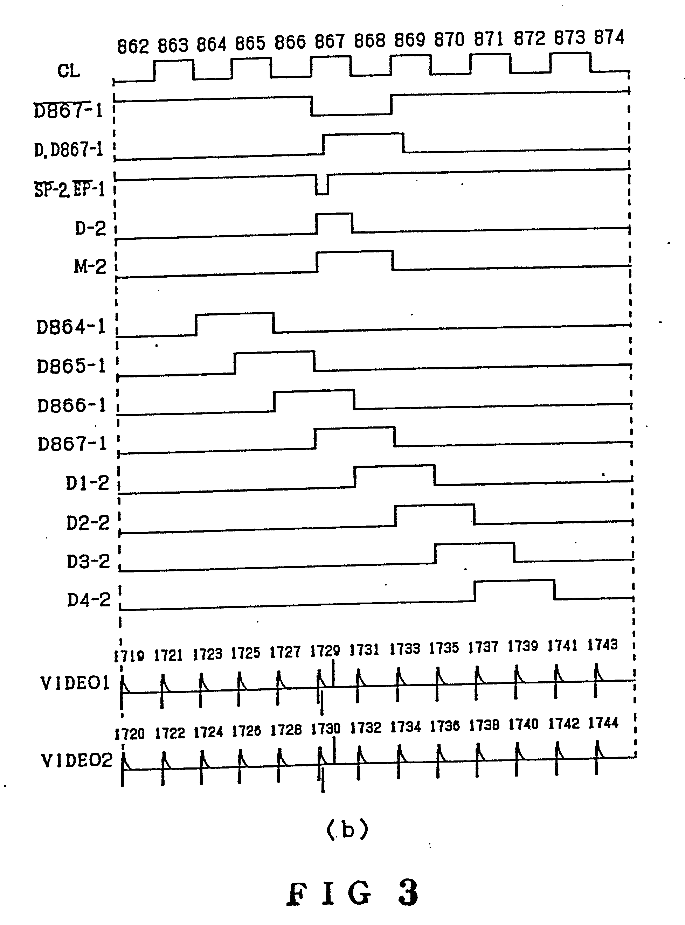

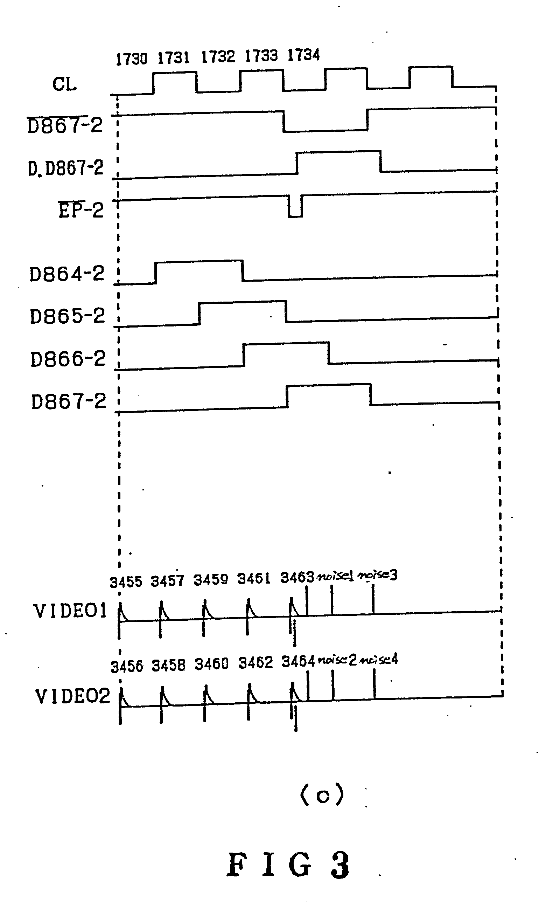

Figure 3 is a diagram showing the timing of the signals produced in the circuitry of Figure 2 when applied to a contact-type image sensor. Figure 3 (a) represents the initial part of the operation, Figure 3 (b) represents the middle part thereof, and Figure 3 (c) represents the final part. The signals CL, VIDEO 1 and VIDEO 2 are continuous. The suffixes -1 and -2 indicate sensor chips 1 or 2. D shows the output of the NAND gate 103, M shows the output of the inverter 107, and D1 to D867 show the outputs of the inverters 110 and 114 of each of the 433 cells and of the inverter 118. $\overline{D867}$ shows the output of the inverter 120 and DD867 shows the output of the inverter 123. VIDEO 1 and VIDEO 2 show the video output currents.

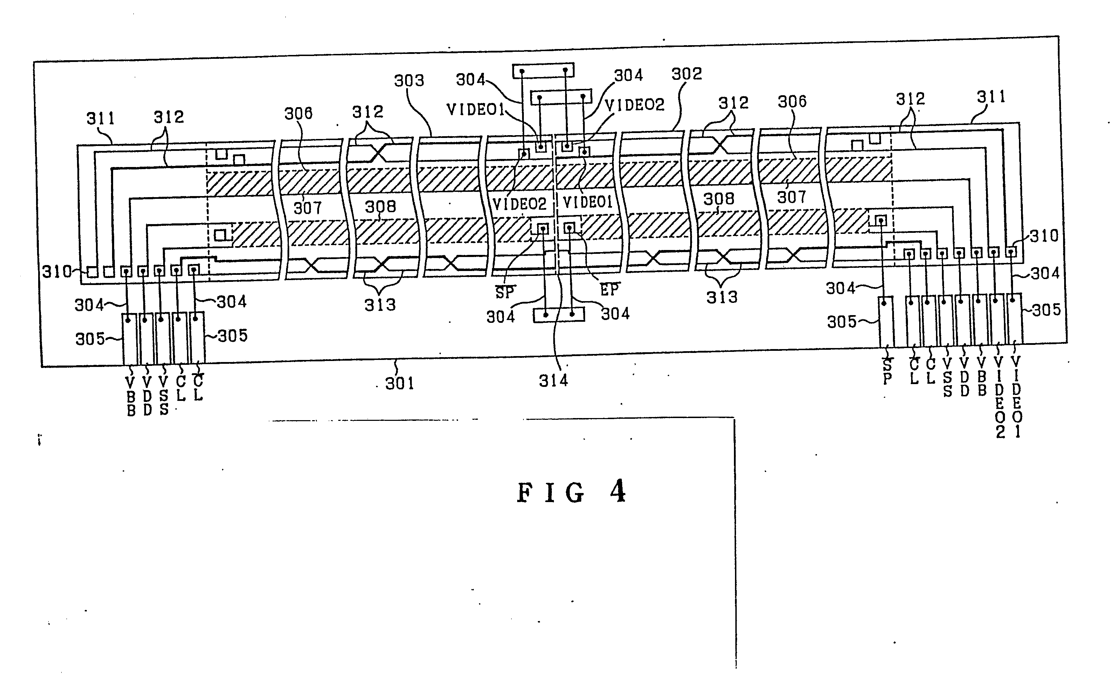

As mentioned above, two chips may be mounted on the same substrate and connected together. The configuration in this instance is shown in Figure 4. More than two chips may also be connected, the structures of the chips then being changed so that both ends of the central chips form connecting portions. The chips 302 and 303 are mounted on the substrate 301. The chips and the substrate are electrically connected to each other by bonding wires 304. The video output terminals VIDEO 1 and VIDEO 2 are electrically connected between the chips 302 and 303 through pads on the substrate 301. Additionally, the end pulse terminal $\overline{EP}$ of the chip 302 and the start pulse terminal $\overline{SP}$ of the chip 303 are electrically connected through further pads on the substrate 301.

Additional pads 305 formed on the substrate 301 are connected to the input and output terminals VIDEO 1 VIDEO 2, $V_{BB}$ (bias power source), $V_{DD}$, $V_{SS}$, CL, $\overline{CL}$ and $\overline{SP}$ as shown. The chips 302 and 303 are mounted so that their connecting end surfaces 314 face each other, and so that the photo-sensitive elements corresponding to the photo-diodes D1 to D1734 and provided within both chips 302 and 303 in a photo-sensitive portion 306, are aligned in a line at approximately regular intervals.

Switches, corresponding to the transistors S1 to S1734, are provided in a switch portion 307 to be selected serially by the scanning circuit in a portion 308. Each switch of the switch portion 307 is electrically connected to a respective photo-sensitive element of the photo-sensitive portion 306, and every photo-sensitive element of the photo-sensitive portion 306 is electrically connected to the others by another terminal, as in Figure 2. And the video lines 312 are arranged so that the anodes of the odd numbered photo-diodes are electrically connected to the output terminal VIDEO 1 and the anodes of the even numbered photo-diodes are electrically connected to the output terminal VIDEO 2.

The scanning circuit portion 308 is arranged so that two pairs of photo-sensitive elements (in Figure 2 a pair of the odd and even numbered photo-diodes) are selected at any one time. In order to make the scanning circuit simple, a master output and a slave output within the shift register are used without gating as the selecting pulses (see Figure 3). Thus, four photo-diodes are always conductively connected with the video lines. However, this has turned out to be no problem owing to the accumulation operation of the sensor.

The video output terminals VIDEO 1 and VIDEO 2 of the chips 302 and 303 are electrically connected to each other as shown in Figure 4 to form the video output terminals "VIDEO 1" and "VIDEO 2". Thus, even though two chips 302 and 303 are used (or more than two chips are used), it is possible to make the external circuit simple by using only one video output terminal "VIDEO 1" and only one video output terminal "VIDEO 2".

It is a feature of the present invention that the video lines 312 cross each other at least once (see Figure 4). The reason for this is that there exists floating capacitance between the clock lines 313 and the video lines 312, which causes clock noise in the video signal current (see Figure 3), thereby lowering the S/N ratio. n the case where there is more than one video line 312, the clock noise level on the video lines 312, and hence the S/N ratios, would tend to be different and it would be difficult to use such a sensor. However, by crossing the two video lines 312 (in Figure 4 the video lines 312 cross over each other at the central portion of each chip), the floating capacitance between them and the clock lines 313 is made uniform, thereby making the S/N ratio on both video lines at any time equal.

Of course, the same idea may be applied to other lines which produce noise.

In particular, the scanning circuit portion 308, the positive phase and negative phase clock lines 313 are also crossed within the chips 302, 303 (in Figure 4 there are three cross over points in each chip). This further suppresses the clock noise, by making floating capacitance between the positive phase clock line and the video lines equal to that between the negative phase clock line and the video lines. In Figure 4, the thick line represents the positive phase clock line 313 and the thin line represents the negative phase clock line 313. Further, as shown in Figure 4, the positive phase clock line 313 in the chip 302 is positioned opposite to the positive phase clock line 313 in the chip 303. By using these means, it has turned out to be possible to suppress the clock noise significantly.

Floating capacitance also exists between the pads associated with the start pulse terminal $\overline{SP}$ and the end pulse terminal $\overline{EP}$ and the video lines 312, and produces noise (see Figure 3) in the video signal currents. However, if the end pulse $\overline{EP}$ is made to rise and to fall during the selection of the photo-diodes D1733 and D1734, both positive and negative noise is generated in each of the video signal currents, VIDEO 2. By integrating these video signal currents, the noise cancels itself, thereby rendering effective the output of the photo-diodes D1733 and D1734.

The above features are particularly desirable in the case where a plurality of chips are connected in a line for producing a solid state image sensor which has a high performance. Of course, it is possible to use only one chip and, in such a case, the start pulse processing circuit and the end pulse processing circuit can be omitted. However, it is preferred to leave them present to allow more than one chip to be connected if necessary. As for the number of video lines, in the present embodiment, there are two. One video line is associated with a group of the odd numbered photo-sensitive elements and the other video line is associated with a group of even numbered photo-sensitive elements. The photo-sensitive elements are thus divided into two groups. However, it is possible to have only one group or more than two groups according to the density of the scanning circuit, the density of the photo-sensitive portion and the scanning speed. In the case of one group, naturally the video line does not need to cross itself. However, in the case of more than two groups, the video lines preferably cross one another at some points.

Although the actual reduction in noise achieved by the crossing of the video lines, the crossing of the clock lines and the arrangement of the start and end pulse processing circuits varies with the mounting structure, the wire bonding structures and the line pattern within the chip, the introduction of the above features is advantageous in each case. According to the example of the present embodiment, the S/N ratio improves 5 to 15dB by crossing over the clock lines and improves 5 to 12dB by crossing over the video lines. Further, the reduction in the noise produced from the photo-sensitive portion, in the vicinity of the connected ends of the chips, achieved by the start and end pulse processing circuits is remarkable, and by making the pulse width of the end pulse less than a half cycle of the clock signal, the S/N ratio around the connection improves by more than 40dB. Generally, the video signal is amplified in an external circuit, the video signal then being integrated. A sample hold function may be performed as the occasion demands. If the sample hold function is performed, it is desirable for the end pulse at least to start rising prior to the sample hold taking place (of course, it is better to have risen completely).

As for the end and start pulse processing circuits, the following features have been found by estimates and experiments, to be effective in compensating for a lack of symmetry in the connecting line patterns within the chips.

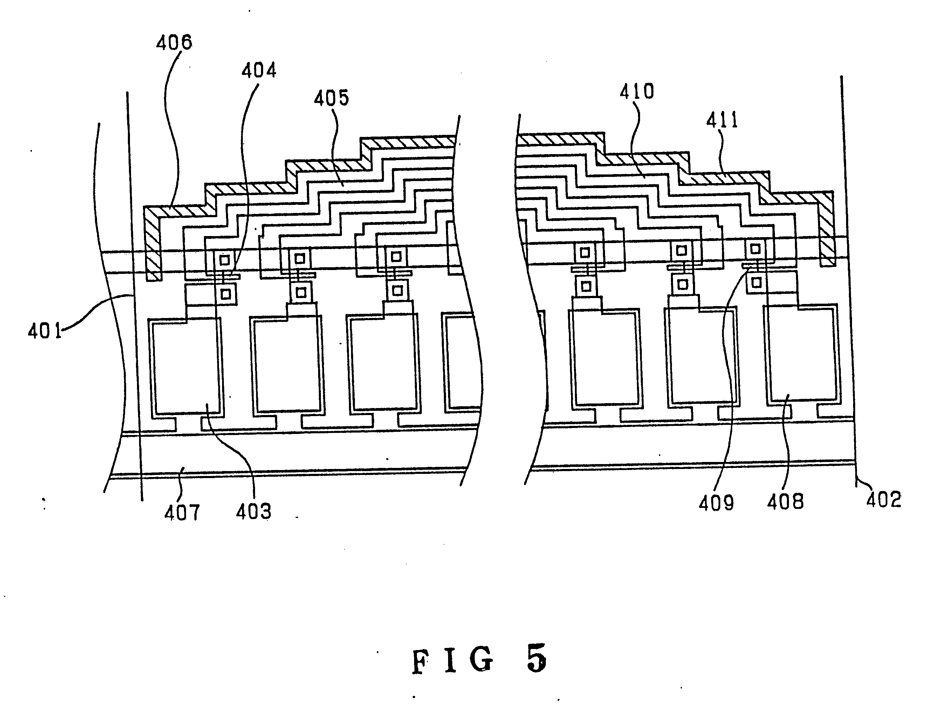

Figure 5 is an enlarged illustration showing one example of the connecting lines to the photo-sensitive elements which are disposed at the beginning and end of a chip according to the present invention. In Figure 5, the reference numerals 401 and 402 represent the ends of a chip in a case where a plurality of chips are aligned. The reference numerals 403 and 408 indicate the photo-sensitive elements which comprise non-mono-crystalline semi-conductor material and upper and lower electrodes. The reference numerals 404 and 409 designate the switches for selecting the photo-sensitive elements, which switches comprise non-mono-crystalline thin film transistors. In this instance, only a single video line is envisaged for ease of explanation, but there is no problem if a plurality of video lines are used.

The reference numerals 405 and 410 designate connecting lines joining the selecting switches to the scanning circuit. Since the scanning circuit is offset towards the centre of the chip from the photo-sensitive elements at the beginning and the end of the chip, as a result of the provision of the start and the end pulse processing circuits, the connecting lines converge towards the centre of the chip. The reference numerals 406 and 411 designate conductive elements provided for suppressing noise at the join between chips. The elements 406 and 411 are grounded to the power source for driving the photo-sensitive elements and so on, and are shaped to correspond to the pitch and width between the connecting lines to the selection switches so that the lines 405 and 410 can effectively obtain the same symmetry as the pattern of the connecting lines for controlling the switches towards the centre portion of the chip. It is possible to obtain a beneficial effect from forming the conductive elements by a different process from that used for forming the connecting lines to the analog switches. However, if the same process is used, the pattern accuracy and the dielectric property of the insulating layer between wires are equal so that the symmetry of the coupling capacitance between the different connecting lines and between the lines 405, 410 and the elements 406, 411 increases, thereby obtaining a further improvement.

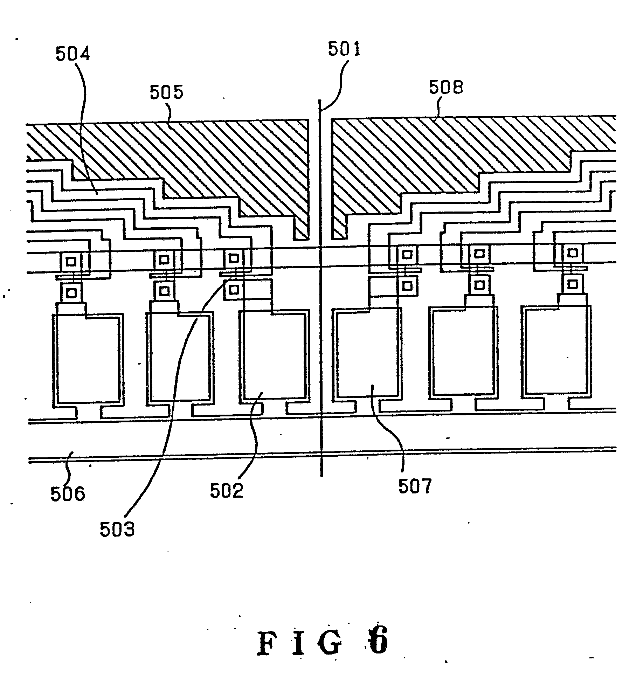

Figure 6 shows another example of the conductive elements in the portions of the chips adjacent the join, wherein the elements 505 and 508 for suppressing noise at the join are wider so as to increase the shielding effect against electro-static fields. This is especially suitable for a case where the circuit pattern is very different in the region of the join from elsewhere.

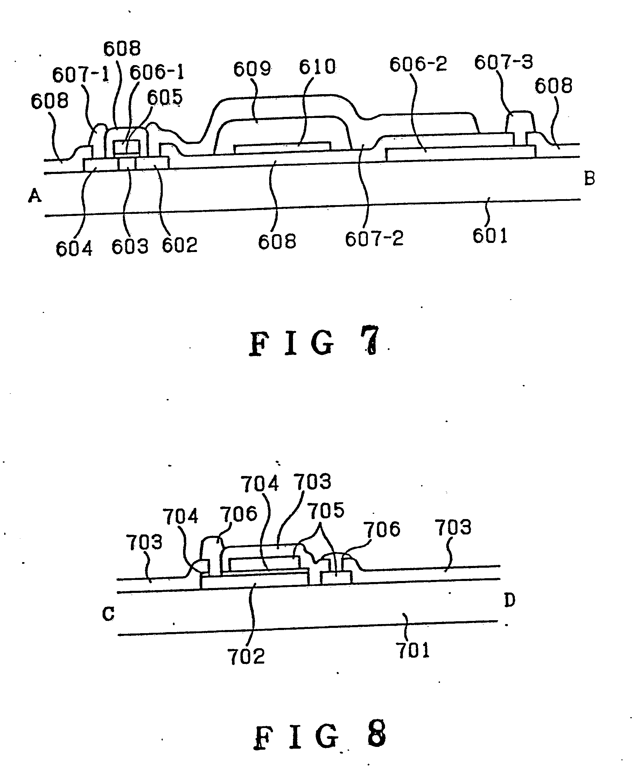

Concerning further improvement of the S/N ratio, reference is made to Figure 7, which is a cross sectional view through a chip of a solid state image sensor according to the present invention in a direction perpendicular to the scanning direction. Each selection switch comprises a thin film transistor formed on the substrate 601, from layers 602 to 608. Each photo-sensitive element is formed from layers 607-2, 609 and 610 on the layer 608, which comprises an inter-layer insulating film. The layers 607-2 and 610 constitute electrodes of the photo-sensitive element.

This embodiment provides a capacitor in parallel with each photo-sensitive element, using the above mentioned material without any additional step.

The inter-layer insulating film 608 provides the dielectric material and the electrode 607-2 of the photo-sensitive element and material 607-1 such as aluminium (possibly including silicon, copper and so on), providing the conductive element of Figures 5 and 6, serve as one electrode of the capacitor. In this embodiment, silicon dioxide is used for the inter-layer insulating film, but silicon nitride and organic material such as polyimide can be used as the dielectric material.

For the other electrode, non-mono-crystalline silicon material 606-2 is used. The resistance of this is lowered by adding impurity as the gate wiring material 606-1 of the thin film transistor. This electrode is connected to the electrode 610 of the photo-sensitive element through a contact hole (not shown in Figure 7) in the inter-layer insulating film 608.

In this embodiment, ITO film is used to make the electrode 610 transparent, and the substrate 601 is also transparent, thereby introducing light through the substrate to the photo-sensitive element. Further, the electrode 607-2 is connected to the thin film transistor, and the silicon material 606-2 is located under the inter-layer insulating film 608. Thereby, it is possible to provide an improved solid state image sensor. The material 606-2 is connected to material 607-3 providing the video lines (of course, the video lines 607-3 are formed of the same material as the conductive element 607-1 and the electrode 607-2 and in the same step). It is thus possible to connect each photo-sensitive element to the desired video line at the desired location at the time of opening the contact hole in the inter-layer insulating film 608. With this structure, it is possible to form the additional capacitors without any new materials and without any new steps and to form a solid state image sensor having a plurality of the video lines. If a plurality of video lines is not required, the transparent electrode 610 and the video line 607-3 are connected directly and the contact between the electrode 606-2 and the inter-connecting line 607-2 is made through the contact hole, namely it is possible to form the chip with only one formation of the contact hole.

A further capacitor is shown in Figure 8 and can be formed by using as the dielectric material a gate insulating film 704 of the thin film transistor (this corresponds to the layer 605 in Figure 7). The electrodes may then be provided by electrode 702 of the transistor and non-mono-crystalline silicon 705 (corresponding to layers 602, 603 and 606-1 in Figure 7), contact being made through the inter-layer insulating film 703. An advantage of using the gate insulating film as the dielectric material of the capacitor is that a large capacitance can be obtained from a small area due to the thinness of the gate insulating film, which is in the region of hundreds to thousands of angstroms. In a case where the lower electrode 702 has a low concentration of impurity and where the capacitance value is changed by the applied voltage, additional doping is possible to increase the density of the impurity. When doping is also used to control the threshold voltage of the tin film transistor, such additional doping can be performed at the same time.

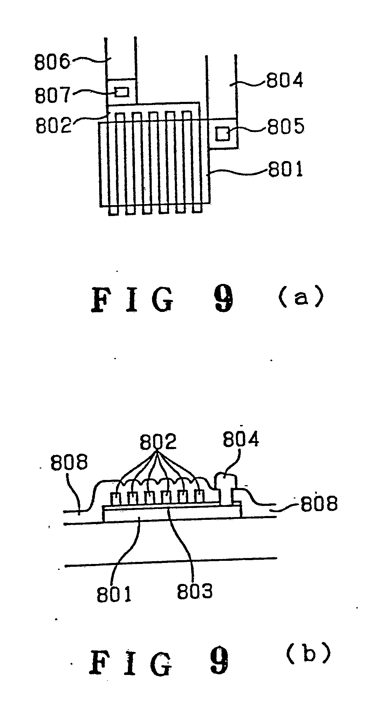

Figure 9 is an illustration showing another chip structure in the case where the gate insulating film of the thin film transistor is used as the dielectric material to form the capacitor in parallel with the photo-sensitive element. Figure 9 (a) is a plan view of the chip and Figure 9 (b) is a cross sectional view thereof. The reference numeral 801 designates a thin film formed in the same step as the forming of the source and drain regions and the channel region of the thin film transistor, and this thin film 801 forms a lower electrode of the capacitor. The reference numeral 802 designates an upper electrode of the capacitor, which electrode is formed in the same step as the forming of the gate line; the numeral 803 designates a dielectric material formed in the same step as the forming of the gate insulating film; the numeral 804 designates a connection line; the numeral 805 designates a contact hole for connecting the lower electrode 801 and the line 804; the numeral 806 designates another line; the numeral 807 designates a contact hole for connecting the line 806 and the upper electrode 802; and the numeral 808 designates an inter-layer insulating film.

As shown in Figure 9 (a), the upper electrode 802 of the capacitor in this embodiment forms a tandem type fine pattern (a stitch type and so on can also be used). The reason for this is that the impurity enters only the regions of the lower electrode 801 which are not covered by the upper electrode 802 in the doping step for forming the source and drain regions of the thin film transistor. After that the impurity is diffused all over the lower electrode in a thermal diffusing step. When the width of the gate electrode pattern is defined as 5 microns, it is desirable for the width of the pattern of the upper electrode 802 to be less than 2 microns. By using this chip structure, even if the capacitor is formed with the gate insulating film as the dielectric material, an additional step of doping with the impurity can be omitted.

In the present invention, the photo-sensitive elements are photo-diodes made using amorphous silicon, and the deposition of the amorphous silicon is performed after forming the transparent electrode on the transparent insulating substrate in most embodiments. The upper electrode acts also as inter-connecting material and is formed by sputtering aluminium to which silicon and copper have been mixed. Other materials are also within the scope of the present invention, and chrome, nickel, nicrome, titanium, tungsten and so on can be used. The amorphous silicon is formed by the decomposition of silane gas using radio frequency glow discharge techniques. The photo-diodes are made to have a p-i-n structure. In particular, the p-layer may be amorphous silicon carbide (a-Si$_x$ C$_{1-x}$ : H) which is doped with boron and the silane gas and metan gas may be mixed with diborane gas to form this p-layer. The n-layer may be formed by doping the amorphous silicon carbide with phosphorous. The i-layer may be formed by amorphous silicon in which hydrogenation is performed using the silane gas (SiH$_4$). By these means, excellent diode properties can be obtained and it is possible to realise a photo-diode having a high reliability needed in the thermal process. Furthermore, this formation results in a low dark current and additionally the matching with the thin film transistor providing the selection switch is also good.

As for the thin film transistor, poly-crystalline silicon is used in most embodiments of the present invention. The poly-crystalline silicon is deposited by the decomposition of silane gas by the low pressure CVD method. The gate insulating film is formed by the thermal oxide silicon, the gate electrode is formed by using the poly-crystalline silicon which is doped heavily, and the source and drain regions are formed by ion implantation. Such photo-sensitive elements and thin film transistors can be formed by selection from amorphous, micro-crystalline, poly-crystalline silicon and so on so long as the silicon is non-mono-crystalline. Additionally, if the crystallinity thereof is improved, further benefits can be obtained. In particular, by using the improved crystallinity in the thin film transistor, a high speed scanning operation can be realised, thereby offering wide application for the present solid state image sensor in the future.

Further means for improving the properties of the selection switch are set out in the following description. According to this feature of the invention, the ratio of ON to OFF current of the analog switch for selecting the photo-sensitive element is made to be high, thereby realising a solid state image sensor having a high scanning speed and high S/N ratio.

Referring to Figure 10, the dependence of the channel width W on the ON current, IDS of the thin film transistor (hereinafter referred to as TFT) can be established in the region by the following formula W $\geq$ 10.

$$IDS = A * W + C \quad (A, C : a\ positive\ constant) \quad (1)$$

Therefore, in the case of one TFT, when W is 20 microns, IDS equals 50 micro-amps. On the other hand, when two TFTs are provided in parallel, in each of which W is 10 microns, the larger value of IDS equals 60 micro-amps can be obtained. Alternatively, when a value of 50 micro-amps is desired for IDS and two TFTs are provided in parallel, it is sufficient for W to be 8 microns in each instance, the total of the two W added together being only 16 microns. However, since the OFF current of the TFT is proportional to the value of W, when two TFTs are provided in parallel, the OFF current decreases (hence the ratio of ON to OFF increases). Accordingly, the noise component derived from the OFF current of the analog switch decreases.

Further, in a case where more than two TFTs are provided in parallel, this effect is enhanced. There is a description concerning the TFT having increasingly small values of W in the IEICE Technical Report SDM 87-49 "High Voltage TFT Using Polycrystalline Si" (T. Unagami et al). However, in the present invention, as mentioned above, sufficient benefit can be obtained from the use of two TFTs, each having a W of 10 microns, provided in parallel.

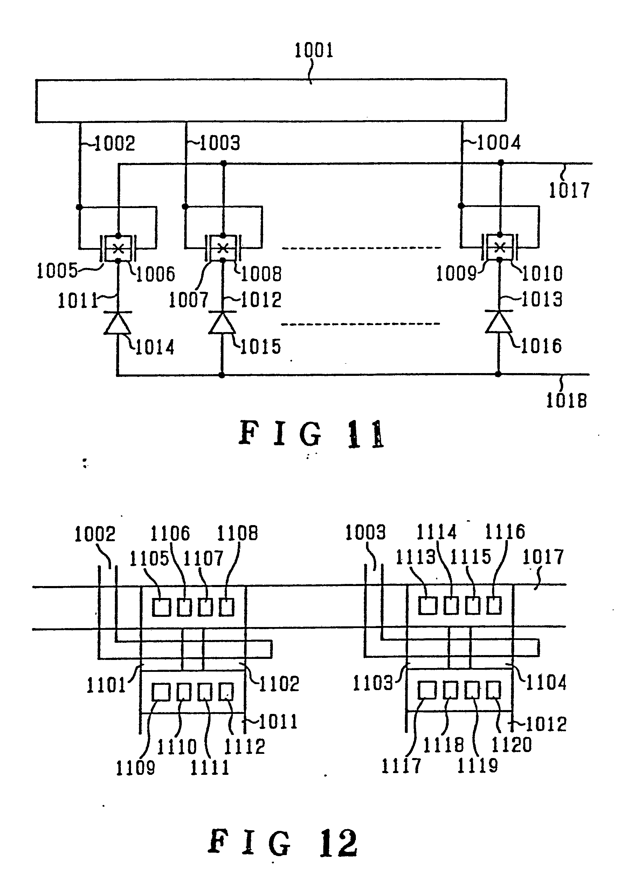

Figure 11 is a diagram of the circuit within a solid state image sensor wherein each analog switch for selecting the photo-sensitive elements comprises two P-channel TFTs in parallel. In Figure 11, the reference numeral 1001 designates a common scanning circuit, the numerals 1002 to 1004 designate lines from the common circuit to carry control signals to the selection switches. The reference numerals 1005 to 1010 designate the P-channel TFTs which are arranged in pairs connected in parallel to form the respective analog switches. The reference numerals 1011 to 1013 designate lines connecting the analog switches and the photo-sensitive elements, and the reference numerals 1014 to 1016 designate the elements themselves. The numeral 1017 designates a supply line from the power source, and the numeral 1018 designates a video line for outputting the stored photo-signal.

Figure 12 is a plan view showing two of the analog switches of Figure 11 and the connecting lines to the associated photo-sensitive elements. The reference numerals 1101 to 1104 designate poly-crystalline silicon thin film for forming the source and drain regions and the channel region of each pair of TFTs connected in parallel. The reference numerals 1105 to 1108 and 1113 to 1116 designate contact holes for connecting the poly-crystalline silicon thin film with the power source line 1017. And, the reference numerals 1109 to 1112 and 1117 to 1120 designate contact holes for connecting the poly-crystalline silicon thin film to the connecting lines 1011, 1012 to the photo-sensitive elements.

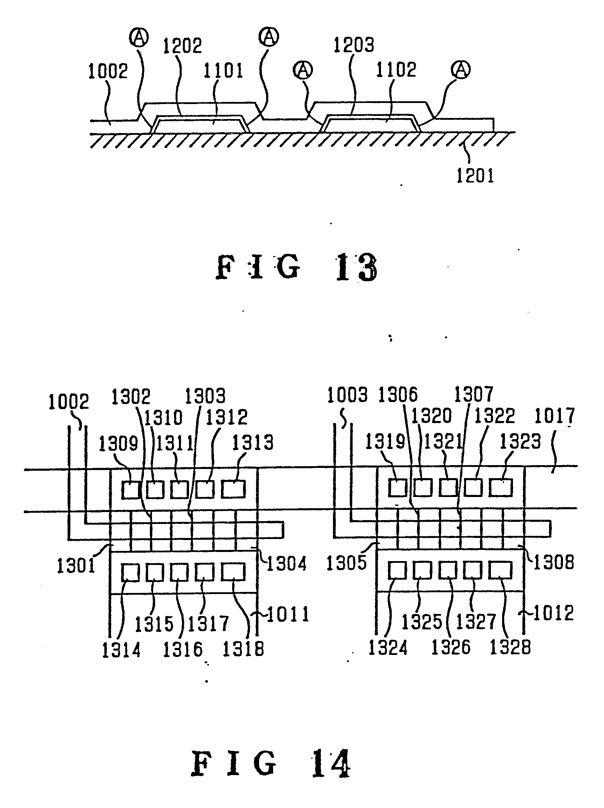

Figure 13 is a cross sectional view through one of the analog switches shown in Figure 12. The reference numeral 1201 indicates an insulating substrate, and the numerals 1202 and 1203 indicate gate insulating films of the two TFTs. In use, the current flows in a direction perpendicular to the plane of the drawing of Figure 13. The positive constant C in the above formula (1) represents the large amount of current flow in the neighbourhood of the side wall of the poly-crystalline silicon (the letter A in Figure 13). Thus, the embodiment as shown in Figures 11, 12 and 13 has two extra side walls by comparison with the example employing a single TFT, thereby obtaining the high ON/OFF ratio. In the present embodiment, when the channel length of the analog switch L = 4 microns, and the channel width of each TFT W = 10 microns, a time of one micro-second for reading one photo-sensitive element and an S/N ratio of 30dB can be achieved between 0°C and 60°C, thereby realising a solid state image sensor having a high scanning speed and a high S/N ratio.

Figure 14 is a plan view showing a modification of the arrangement of Figure 12 including two analog switches, each comprising four TFTs in parallel. In Figure 14, the same numbers as in Figure 12 represent similar parts. The reference numerals 1301 to 1308 designate poly-crystalline silicon thin film for forming the source and drain regions and the channel region of the two groups of TFTs connected in parallel. The reference numerals 1309 to 1313 and 1319 to 1323 designate contact holes for connecting the poly-crystalline silicon thin film with the power source line 1017, and the reference numerals 1314 to 1318 and 1324 to 1328 designate contact holes for connecting the poly-crystalline silicon thin film to the two connecting lines 1011, 1012 to the photo-sensitive elements. Comparing this embodiment with the embodiments of Figures 11, 12 and 13, the present embodiment improves the ON/OFF ratio of the analog switches even further. The greater the number of TFTs provided in parallel, the more the ON/OFF ratio of the analog switches improves. Therefore, it is advantageous to increase the number of TFTs in accordance with the allowable space.

The features described above permit the solid state image sensor to be made having a large area, wherein a plurality of sensor chips are aligned in a line, and the photo-sensitive elements are aligned in a line, whilst also giving low noise and a high S/N ratio over the entire area without any substantial changes in the internal circuit.

In particular, in a structure having a plurality of video lines, high speed and excellent effects may be realised.

In the case where there are a plurality of the sensor chips, the solid state image sensor also shows very low noise properties at the joins between the chips, nearly as good as in the case of only one sensor chip. Therefore, it is possible to minimise the deterioration of the S/N ratio previously caused by using a plurality of sensor chips.

Further, the number of input/output lines to the chips is minimised, and the external signal processing circuits can be also minimised, resulting in a solid state image sensor at a low cost and with a simple structure.

Still further, it is possible to realise a solid state image sensor having a high performance and high S/N ratio with a large dynamic range as well as having a high density and high speed.

## Claims

1. A solid state image sensor having at least one sensor chip (302,303) comprising a plurality of photo-sensitive elements (D1 - D1734; 403,408; 502,507; 607-2, 609, 610; 1014-1016) arranged in a line between a first and a second end (401,402; 501) of the chip, a scanning circuit (103-125; 1001) for selecting the photo-sensitive elements respectively for generating a sensor output, and lines (405,410; 504) connecting the photo-sensitive elements to the scanning circuit characterised in that means (406,411; 505,508) are provided at the ends of the chip adjacent to the connecting lines for reducing noise in the region of the join when the chip is connected to a further such chip.

2. A sensor as claimed in claim 1, characterised in that the means for reducing noise comprise conductive elements arranged to be held at ground potential.

3. A sensor as claimed in claim 2, characterised in that the connecting lines are arranged in a line pattern, and in that the conductive elements have a configuration corresponding to the line pattern of the connecting lines.

4. A sensor as claimed in claim 2 or 3, characterised in that the connecting lines and the conductive lines are formed from the same material.

5. A solid state image sensor having at least one sensor chip (302,303) which comprises a plurality of photo-sensitive elements (D1 - D1734; 403,408; 502,507; 607-2, 609, 610; 1014-1016) and a scanning circuit (103-125; 1001) for selecting the photo-sensitive elements respectively for generating a sensor output, and signal lines (312,313) for supplying input signals to the scanning circuit and for carrying output signals from the photo-sensitive elements characterised in that respective ones of the signal lines are arranged so as to reduce variations in stray capacitance between the input and the output signal lines.

6. A sensor as claimed in claim 5, characterised in that the respective lines cross each other at least once.

7. A sensor as claimed in claim 6, characterised in that the respective lines comprise video lines (312) for receiving the outputs from the photo-sensitive elements.

8. A sensor as claimed in claim 6 or 7, characterised in that the respective lines comprise a positive phase clock line and a negative phase clock line (313) for carrying clock signals for controlling the timing of the scanning circuit.

9. A solid state image sensor having at least one sensor chip (302, 303) which comprises a plurality of photo-sensitive elements (D1 - D1734; 403,408; 502,507; 607-2, 609, 610; 1014-1016), a plurality of selection switches (S1 - S1734; 404,409; 503; 602-608; 1005-1010) operable to select the photo-sensitive elements respectively for generating a sensor output, and a scanning circuit (103-125; 1001) for operating the selection switches, characterised in that each selection switch comprises a pair of transistors (1005 -1010) arranged in parallel.

10. A sensor as claimed in claim 9, characterised in that each transistor has a channel width which is less than 10 microns.

11. A solid state image sensor having at least one sensor chip (302,303), which comprises a plurality of photo-sensitive elements (D1 - D1734; 403,408; 502,507; 607-2, 609, 610;

1014-1016) and a scanning circuit (103-125; 1001) for selecting the photo-sensitive elements respectively for generating a sensor output, characterised in that a capacitor is provided in parallel with each of the photo-sensitive elements and is formed from the same material (606-2, 607-1, 607-2, 608, 610; 702, 704, 705; 801,802,803) as other components of the sensor.

12. A sensor as claimed in claim 11 characterised in that the capacitor is at least partially formed from the same material (606-2, 607-1, 607-2, 608, 610) as the associated photo-sensitive element.

13. A sensor as claimed in claim 11, characterised in that a plurality of selection switches (S1 - S1734; 404,409; 503; 602-608; 1005-1010) are arranged to be operated by the scanning circuit for selecting the respective photo-sensitive elements and in that the capacitor is at least partially formed from the same material (702, 704, 705; 801,802,803) as the selection switch for operating the associated photo-sensitive element.

14. A solid state image sensor as claimed in any preceding claim, characterised in that the scanning circuit comprises a signal transmitting circuit (116 -125, EP) arranged to supply a scanning signal pulse during a period when a respective one (D1733, D1734) of the photo-sensitive elements is selected in order to indicate the state of a scanning operation.

15. A sensor as claimed in claim 14, characterised in that a plurality of the sensor chips are provided and are connected together in series, and in that the scanning circuit of each succeeding chip is arranged to be responsive to the scanning signal pulse supplied by the signal transmitting circuit of the preceding chip for commencing a scanning operation.

16. A sensor as claimed in claim 14 or 15, charac terised in that the photo-sensitive elements are disposed in a line, and in that the signal transmitting circuit is arranged to supply the scanning signal pulse during the period when the last photo-sensitive element in the line is selected.

17. A sensor as claimed in any of claims 14 to 16, characterised in that the scanning circuit is arranged to select the photo-sensitive elements successively in groups.

18. A sensor as claimed in claim 17, characterised in that the periods when successive groups of the photo-sensitive elements are selected overlap.

19. A sensor as claimed in any preceding claim, characterised in that the scanning circuit and each of the photo-sensitive elements includes non-mono-crystalline material.

20. A sensor as claimed in claim 19, characterised in that the crystallinity of the non-mono-crystalline material is enhanced.

21. A sensor as claimed in any preceding claim, characterised in that each of the photo-sensitive elements comprises a photo-diode comprising an amorphous silicon film.

2. A sensor as claimed in claim 21, characterised in that each photo-diode comprises a p-i-n diode in which the p-region and the n-region include carbon.

23. A sensor as claimed in any preceding claim characterised in that each of the photo-sensitive elements is controlled by the scanning circuit through a respective thin film transistor (S1 - S1734; 404,409; 503; 602-608; 1005-1010) comprising poly-crystalline silicon.

FIG 1

EP 0 314 494 A2

(a)

(b)

FIG2

cell 1　　　　cell 2

SP　VBB　VIDEO2　VIDEO1

VDD　CL　$\overline{CL}$　VSS

101　102　103　104　105　106　107　108　109　110　111　112　113　114　115

S1 S2 S3 S4 S5 S6 S7 S8

D1 D2 D3 D4 D5 D6 D7 D8

R1

EP 0 314 494 A2

(o)

FIG 2

EP 0 314 494 A2

(b)

# F I G 3

FIG 3

FIG 4

311 312 306 312 303 304 VIDEO1 304 VIDEO2 302 312 306 312 311

307 308 VIDEO2 VIDEO1 308 307

310

310 304 304 SP EP 313 304

304 305 305 SP 304 310

V B B V D D V S S C L C L

301 314 304 305

SP C L C L V S S V D D V B B VIDEO2 VIDEO1

313

EP 0 314 494 A2

FIG 5

FIG 6

FIG 7

FIG 8

FIG 9 (a)

FIG 9 (b)

F I G 10

1001

~1002    ~1003    ~1004

1017

1005    1006    1008    1009    1010

1007    1012    1013

1011    1014    1015    1016

1018

F I G   11

1002    1106    1108    1003    1114    1116

1105   1107    1113   1115    1017

1101    1102    1103    1104

1011    1012

1110    1112    1118    1120

1109    1111    1117    1119

F I G   12

1002 Ⓐ 1202 1101 Ⓐ Ⓐ 1203 1102 Ⓐ

1201

# F I G 1 3

1002 1302 1303 1003 1306 1307
1310 1312 1320 1322 1017
1309 1311 1313 1319 1321 1323

1301 1304 1305 1308
1315 1317 1011 1325 1327 1012
1314 1316 1318 1324 1326 1328

# F I G 1 4